# FASCICULE DE BREVET EUROPEEN

(11) **EP 2 047 740 B1**
(45) Date de publication et mention de la délivrance du brevet: **30.06.2010**
(21) Numéro de dépôt: 08358012.6
(22) Date de dépôt: 30.09.2008
(51) Int. Cl.: A01G 3/04

(54) **Procédé et machine pour la taille automatique de la vigne**
Verfahren und Maschine zum automatischen Beschneiden von Reben
Method and machine for automatic vine cutting

(30) Priorité: 09.10.2007 FR 0707083
(43) Date de publication de la demande: 15.04.2009
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- EP-A- 0 312 126
- EP-A- 0 898 877
- FR-A- 2 852 785
- FR-A- 2 878 124
- US-A1- 2006 162 309

## Description

La présente invention concerne un procédé et une machine pour la taille automatique de vignes cultivées selon le mode de conduite en cordon dit "en cordon de Royat" selon lequel au moins un sarment fructifère ou cordon est fixé autour d'un fil porteur horizontal, généralement par enroulement spiralé dudit cordon.

Dans le domaine de la viticulture, il existe une compétition sévère entre les producteurs sur le plan mondial. Les prix de revient sont un des critères déterminants pour rester compétitifs. Ces prix de revient résultent, pour une large part, de techniques culturales mises en oeuvre aux vignobles. La mécanisation des opérations vinicoles, telles que, par exemple, le prétaillage, l'écimage, la vendange, le traitement de la vendange, a permis de réduire les postes de main d'oeuvre et donc de diminuer les coûts de production. La taille constitue, cependant, le poste de main d'oeuvre le plus coûteux car elle nécessite toujours une phase de reprise manuelle à la suite du prétaillage mécanique de la vigne. En effet, le prétaillage mécanique de la vigne permet de sectionner et de dégager le maximum des bois ou sarments dont les vrilles sont fixées aux fils du palissage, à une distance réduite du cordon. Toutefois, le prétaillage ne permet pas de contrôler avec précision la longueur des bois devant rester attachés au cordon, ni par conséquent le nombre d'yeux ou bourgeons fructifères que comportent ces bois. Une reprise manuelle est donc obligatoirement effectuée à la suite du prétaillage, afin d'ajuster la longueur des bois au nombre d'yeux devant être conservés. D'autre part, cette reprise manuelle a pour but d'éliminer les bois oubliés, notamment latéralement et sous le cordon, ainsi que les repousses sur le tronc. La taille manuelle vise, par conséquent, à assurer la précision de la taille, ce qui permet au viticulteur d'établir le rendement de production désiré afin de maintenir la qualité de la quantité de vin produite. Un inconvénient majeur de la taille manuelle est le temps nécessaire pour l'effectuer, ce qui représente un pourcentage important du coût de production.

Afin d'améliorer les résultats de l'opération de prétaillage, la déposante a conçu un procédé et un dispositif d'analyse de la structure de haies culturales (WO2004/089063) qui, associé à une machine de prétaillage, par exemple, du genre décrit dans le document EP-0312126, permet de maintenir les organes de coupe de la prétailleuse au-dessus et à distance suffisante du cordon, afin d'écarter tout risque d'endommagement de ce dernier et d'éviter l'élimination d'yeux fructifères qu'il est souhaitable de garder, tout en conservant des bois de taille ou coursons, les plus courts possibles.

En effet, s'il est possible de régler la hauteur des organes de coupe de la machine, à l'entrée d'un rang, leur position par rapport au cordon peut se trouver modifiée durant leur déplacement sur ce rang, en raison des inégalités du sol, de sorte qu'en cas de descente soudaine résultant du passage de ladite machine dans un creux du terrain, le cordon peut se trouver endommagé ou dépouillé de ses yeux fructifères.

Les prétailleuses équipées d'un dispositif d'analyse de la structure de haies culturales tel que décrit dans le document WO2004/089063 ne permettent pas :
- une coupe suffisamment précise pour se dispenser d'une opération ultérieure de taille ou de limiter notablement le temps de reprise manuelle;
- la taille des bois se développant latéralement ou sous le cordon.

La présente invention a notamment pour but de permettre:
- une taille suffisamment précise des bois au-dessus du cordon, de sorte à, sinon éliminer totalement l'opération de reprise manuelle, tout au moins de limiter considérablement le temps de cette reprise, voire de n'effectuer qu'une taille manuelle biennale ou triennale tout en satisfaisant aux impératifs de la taille;
- une taille complète autour du cordon.

Selon l'invention, cet objectif est atteint grâce à:
- un procédé suivant lequel on effectue les opérations suivantes: - prétaillage d'au moins la totalité des bois s'élevant au-dessus des cordons au moyen d'un premier module de coupe permettant d'extraire du palissage les bois coupés résultant de ce prétaillage; - localisation, dans l'espace, des cordons au moyen d'au moins un système de reconnaissance de position et utilisation des informations recueillies par ledit système pour commander le positionnement des organes de coupe d'un deuxième module de coupe travaillant à la suite dudit premier module de prétaillage pour réaliser une coupe rase des bois de taille restants issus de la périphérie du cordon, à une courte distance prédéterminée par rapport audit cordon.
- une machine principalement remarquable en ce qu'elle comprend deux modules installés sur un châssis commun et disposés à la suite l'un de l'autre en considérant le sens d'avancement de ladite machine, en cours de travail, à savoir: d'une part, un premier module de prétaillage, par exemple du genre comprenant deux ensembles de coupe constitués chacun d'une pluralité d'organes de coupe rotatifs ou d'organes rotatifs participant à l'action de coupe, superposés et portés par un axe commun, et, d'autre part, un deuxième module de taille rase comportant des organes de coupe et au moins un système de reconnaissance de position agencé ou configuré pour permettre la localisation, dans l'espace, des cordons et pour commander le positionnement des organes de coupe de ce deuxième module pour réaliser une coupe rase des bois de taille restants issus de la périphérie du cordon, à une courte distance prédéterminée par rapport audit cordon.

Selon un mode de mise en oeuvre très avantageux du procédé, le système électronique commande le positionnement des organes de coupe du deuxième module en fonction des paramètres de vitesse de déplacement de la machine et de prédétermination, par l'opérateur, de la distance de coupe par rapport au cordon.

Selon un mode de mise en oeuvre préféré du procédé applicable à une machine dont les organes de coupe latéraux du deuxième module sont guidés dans leur déplacement de part et d'autre des cordons par des peignes rotatifs, ces derniers peuvent être entraînés en rotation à une vitesse proche de la vitesse d'avancement de la machine en cours de travail.

Selon une disposition caractéristique de l'invention, le module de taille rase comporte au moins deux organes de coupe destinés à évoluer au-dessus des cordons, ces organes de coupe supérieurs étant disposés horizontalement ou, selon une configuration en V renversé.

Selon une autre disposition caractéristique de l'invention, le module de taille rase comporte au moins deux organes de coupe destinés à évoluer en dessous des cordons, ces organes de coupe inférieurs étant disposés horizontalement ou, selon une configuration en V.

Selon une autre disposition caractéristique de l'invention, le module de taille rase comprend des moyens assurant l'écartement automatique et le rappel automatique en position active de rapprochement des organes de coupe supérieurs au passage des piquets du palissage et si nécessaire au passage des ceps.

Selon une autre disposition caractéristique de l'invention, le module de taille rase comprend des moyens assurant l'écartement automatique et le rappel automatique en position active de rapprochement des organes de coupe inférieurs au passage des piquets du palissage et au passage des ceps.

Selon une autre disposition caractéristique de l'invention, le module de taille rase comprend au moins deux organes de coupe latéraux destinés à évoluer de part et d'autre des cordons.

Selon une autre disposition caractéristique de l'invention, les organes de coupe du module de taille rase comportent des outils de coupe circulaires, par exemple des scies.

Selon une autre disposition caractéristique de l'invention, les moyens assurant l'écartement automatique des organes de coupe supérieurs et/ou inférieurs sont constitués par des roues folles ou motorisées, ces roues ayant un rayon légèrement supérieur au rayon d'action des organes de coupe.

Selon une autre disposition caractéristique de l'invention, le module de taille rase comporte un système de monte et baisse permettant aux organes de coupe supérieurs d'effectuer une coupe au-dessus des cordons et de suivre lesdits cordons en hauteur avec une grande précision de quelques millimètres.

Selon une autre disposition caractéristique de l'invention, le module de taille rase comporte un second système de monte et baisse permettant aux organes de coupe inférieurs d'effectuer, sous les cordons, une coupe des bois à une distance précise des cordons, de quelques millimètres.

Selon une autre disposition caractéristique de l'invention, le module de taille rase comporte un système de monte et baisse permettant à l'ensemble des organes de coupe supérieurs, latéraux et inférieurs de se déplacer pour suivre les cordons avec une précision de quelques millimètres.

Selon une autre disposition caractéristique de l'invention, des peignes rotatifs sont disposés devant la face interne des organes de coupe latéraux, ces peignes comportant des doigts recourbés, disposés autour du bord de coupe desdits organes. Les organes de coupe latéraux du module de taille rase comprennent des moyens permettant l'entraînement en rotation des peignes.

Selon une autre disposition caractéristique de l'invention, les organes de coupe supérieurs, et/ou inférieurs, et/ou latéraux du module de taille rase sont montés avec une possibilité de déplacement latéral indépendant.

Selon une autre disposition caractéristique de l'invention, les outils de coupe circulaires des organes de coupe sont entraînés indépendamment par des moteurs, par exemple, par des moteurs électriques ou hydrauliques.

Selon une autre disposition caractéristique de l'invention, le système de vision artificielle équipant le module de taille rase permet d'asservir les systèmes de monte et baisse des organes de coupe supérieurs, des organes de coupe inférieurs et des organes de coupe latéraux.

Selon une autre disposition caractéristique de l'invention, les systèmes de monte et baisse des organes de coupe du module de taille rase comprennent des actionneurs électriques ou hydrauliques.

Selon une autre disposition caractéristique de l'invention, les actionneurs des organes de taille sont pourvus de capteurs de position qui participent aux asservissements desdits actionneurs.

Selon une autre disposition caractéristique de l'invention, la machine est équipée de skis permettant le centrage de celle-ci par rapport aux pieds de vignes et aux piquets. Ces skis se situent sous les organes de coupe des modules de prétaillage et de taille.

Les buts, caractéristiques et avantages ci-dessus, et d'autres encore, ressortiront mieux de la description qui suit et des dessins annexés, dans lesquels:
La figure 1 est une vue schématique illustrant le procédé et la machine de l'invention.
La figure 2 est une vue en perspective d'un exemple de réalisation avantageux de la machine de taille automatique intégrale de la vigne selon l'invention.
La figure 3 est une vue arrière de la machine dont les ensembles de coupe droit et gauche sont représentés en position rapprochée.
La figure 4 est une vue analogue à la figure 3, montrant les ensembles de coupe en position d'écartement.
Les figures 5a et 5b sont des vues de face des organes de coupe supérieurs représentés en situation de taille au-dessus d'un cordon, ces organes de coupe étant disposés horizontalement sur la figure 5a et en position de V renversé sur la figure 5b.
Les figures 6a et 6b sont des vues de face des organes de coupe inférieurs représentés en situation de taille en dessous d'un cordon, ces organes de coupe étant disposés horizontalement sur la figure 6a et en position de V sur la figure 6b.
La figure 7 est une vue en perspective d'un organe de taille.
La figure 8 est une vue en perspective illustrant l'action des moyens permettant l'écartement des organes de coupe supérieurs au passage d'un piquet.
Les figures 9a et 9b sont des vues en perspective illustrant l'action des moyens permettant l'écartement des organes de coupe inférieurs, respectivement au passage d'un cep (figure 9a) et au passage d'un piquet (figure 9b).
La figure 10 est une vue de détail en perspective d'un organe de coupe latéral équipé d'un peigne rotatif.
La figure 11 est une vue en perspective illustrant le fonctionnement des organes de coupe latéraux le long d'un cordon.
La figure 12 est une vue de détail en perspective illustrant plus particulièrement les moyens d'entraînement des organes de coupe.
Les figures 13a et 13b sont des vues de côté illustrant, plus spécialement les systèmes de monte et baisse des organes de coupe supérieurs, inférieurs et latéraux représentés respectivement en position basse et haute.

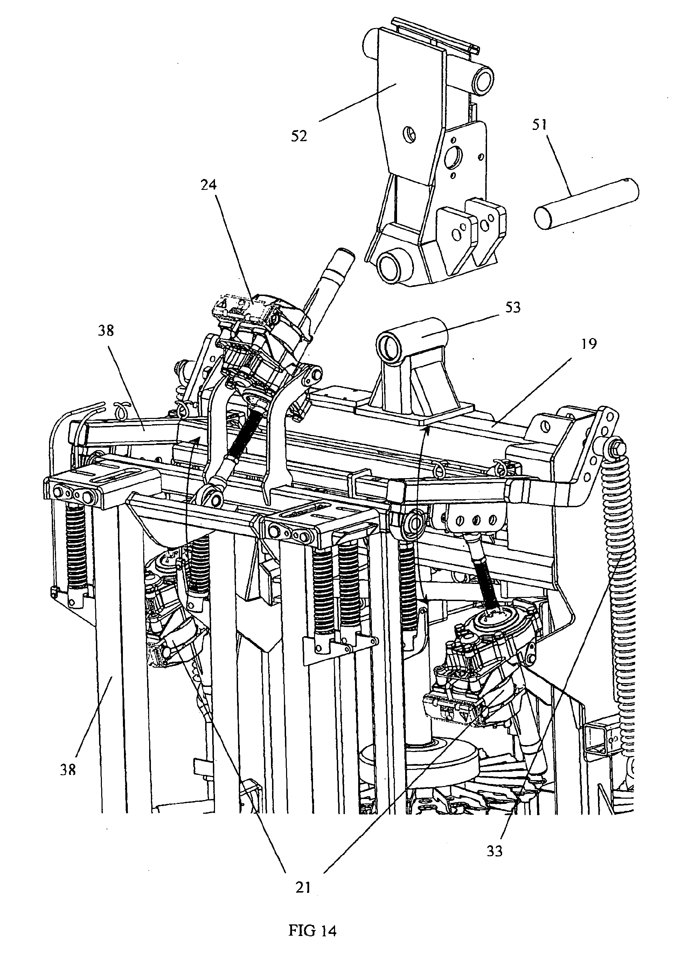

La figure 14 est une vue de détail en perspective illustrant les actionneurs électriques assurant le fonctionnement des systèmes de monte et baisse de l'ensemble du module de taille rase ainsi que le fonctionnement du système de monte et baisse des organes de coupe inférieurs.
Les figures 15a et 15b sont des vues de détail en perspective illustrant, respectivement, le positionnement des capteurs de position des actionneurs du système de monte et baisse du module de taille rase (figure 15a) et des actionneurs du système de monte et baisse des organes de coupe inférieurs (figure 15b).
La figure 16 est une vue de côté illustrant un exemple de réalisation de la machine montée sur un véhicule porteur et montrant le schéma des liaisons du système électronique.

On se réfère auxdits dessins pour décrire des exemples intéressants, bien que nullement limitatifs, de mise en oeuvre de procédé et de réalisation de la machine de taille intégrale de la vigne selon l'invention.

On rappelle que dans le domaine et le langage de la viticulture, notamment dans l'application aux vignes cultivées selon le mode de conduite en cordon dit "en cordon de Royat":
- le terme "prétaillage" qui est utilisé dans le présent exposé et dans les revendications, désigne l'opération consistant à couper les sarments ou rameaux à une distance de l'ordre de 10 à 15 cm du cordon horizontal dont ils sont issus; cette opération est généralement effectuée en période hivernale à l'aide de machines de prétaillage ou prétailleuses (par exemple du genre décrit dans le document EP 0 312 126) permettant d'éliminer simultanément les bois coupés résultant de cette opération;
- tandis que le terme "taille" également utilisé dans la description et les dessins, désigne l'opération consistant à recouper les portions de sarments restant attachées au cordon, à distance plus réduite de celui-ci (par exemple à une distance de l'ordre de 2 à 3 cm); cette deuxième opération de coupe est donc effectuée après le prétaillage, de sorte à ne laisser sur le cordon que le nombre de bourgeons ou yeux déterminé par le viticulteur en fonction du rendement attendu.

Bien qu'il soit question, dans les deux cas, de coupe de sarments ou rameaux, il s'agit en fait de deux interventions différentes dont la première peut être exécutée mécaniquement à l'aide de machines alors que la suivante est toujours opérée manuellement en raison de son caractère délicat nécessitant de la précision.
- le terme "cordon" désigne un sarment ou la partie supérieure courbée du tronc d'un pied de vigne qui a été fixé(e) sur un fil porteur sensiblement horizontal et qui s'est développé(e) le long de ce dernier, généralement par enroulement spiralé autour dudit fil porteur, et à partir duquel poussent les sarments fructifères.

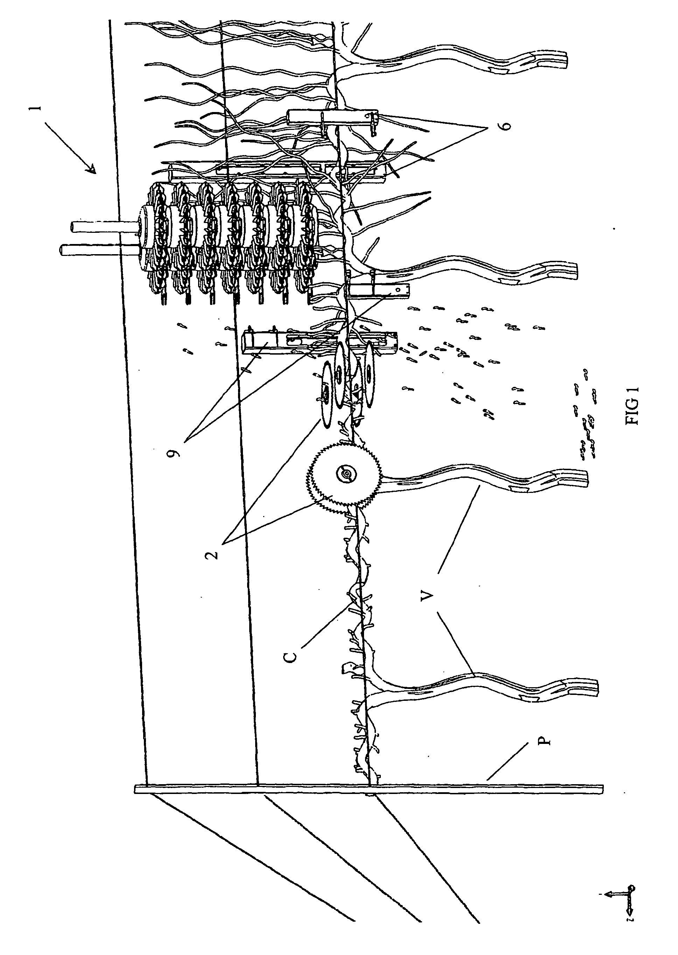

La machine de taille automatique comprend deux modules positionnés sur un châssis commun 19, un premier module, le module de prétaillage 1 et un second module, le module de taille rase 2, montés l'un à la suite de l'autre, dans le sens d'avancement de la machine, comme représenté schématiquement sur la figure 1.

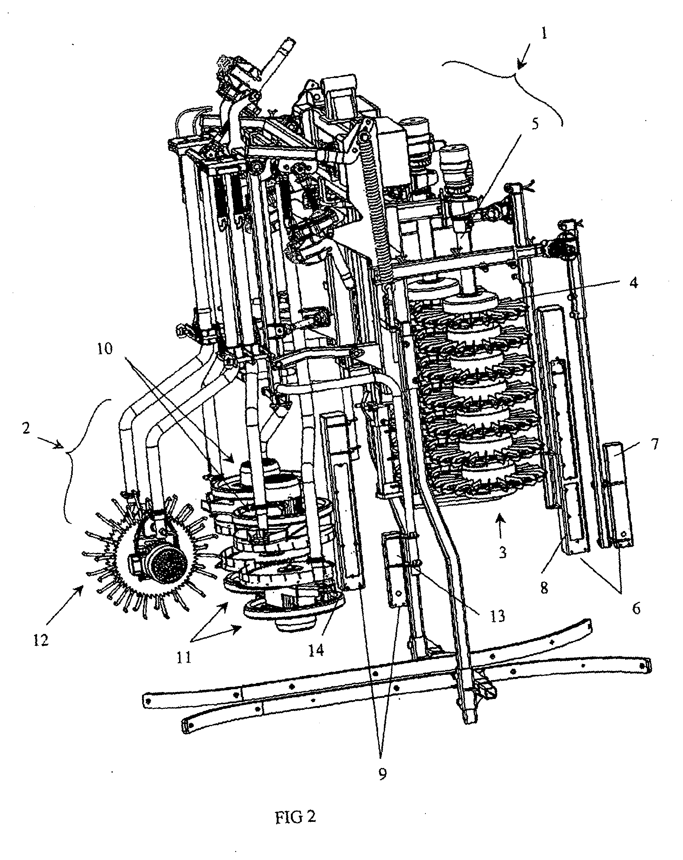

Le module de prétaillage 1 (figure 2) comprend essentiellement:
- une tête de coupe comprenant deux ensembles de coupe 3 constitués, chacun, par une pluralité d'organes de coupe 4 rotatifs, superposés et portés par un axe commun 5, lesdits ensembles de coupe étant montés avec une aptitude de mouvement permettant leur rapprochement, de sorte qu'ils peuvent occuper une position rapprochée de travail, c'est-à-dire une position de coupe, ou leur écartement l'un de l'autre, de sorte qu'ils peuvent s'effacer automatiquement au passage des piquets de palissage, ainsi que leur rappel automatique, en direction de l'axe de travail dudit module après contournement desdits piquets. Une telle tête de coupe est, par exemple, du genre décrit dans le document EP 0 312 126.
- un système de vision artificielle 6, par exemple, du genre décrit dans le document W02004/089063, fonctionnant en transmission directe et comprenant, d'une part, au moins un ensemble émetteur 7, comportant au moins un, et de préférence, une pluralité d'émetteurs de rayons lumineux, et, d'autre part, au moins un ensemble récepteur 8, comportant, au moins un et, de préférence, une pluralité de récepteurs de rayons lumineux disposés verticalement.

Il est, de manière avantageuse, installé à l'avant des ensembles de coupe du module de prétaillage et il est, de préférence, constitué d'émetteurs et de récepteurs infrarouges, et, plus spécifiquement de rayonnement du proche infrarouge. L'ensemble émetteur et l'ensemble récepteur sont disposés à distance l'un de l'autre, de sorte à pouvoir être placés face à face, de part et d'autre du rang de vigne, lorsque la machine se déplace le long dudit rang.

L'ensemble émetteur, comprenant, par exemple, trois émetteurs, est conçu de telle sorte que chacun de ses émetteurs émette une lumière modulée à une fréquence donnée. L'ensemble récepteur comprend, de préférence, trois rangées verticales ou colonnes de récepteurs, chaque colonne de récepteurs pouvant comprendre un nombre relativement important de récepteurs.

La fréquence de chaque émetteur étant la fréquence d'accord de la colonne réceptrice correspondante, chaque colonne réceptrice ne détecte que les signaux émis par l'émetteur correspondant. Lorsqu'un émetteur émet un signal modulé à un instant donné, chaque récepteur de la colonne réceptrice correspondant audit émetteur fournit, soit un état inactif correspondant à un signal non occulté et donc à l'absence d'obstacle entre émetteur et récepteur, soit un état actif correspondant à un signal occulté et donc à la présence d'obstacle entre émetteur et récepteur, cet obstacle étant un des éléments du rang de vigne, à savoir un bois de taille, un piquet ou un cordon.

Il comprend encore un système électronique programmé ou configuré pour traiter les informations générées par les occultations de lumière, pour visualiser les éléments de structure du rang de vigne. Ce système électronique est décrit plus en détail dans la suite du présent exposé.

Le module de taille rase 2 (figure 2) comprend essentiellement dans le sens d'avancement de la machine:
- un système de vision artificielle 9 situé en avant des organes de taille,
- des organes de coupe supérieurs 10, des organes de coupe inférieurs 11, et des organes de coupe latéraux 12 situés à la suite des organes de coupe supérieurs et inférieurs.

Le système de vision artificielle du module de taille rase comporte d'une part, au moins un ensemble émetteur 13, comportant au moins un, et de préférence, une pluralité d'émetteurs de rayons lumineux, et, d'autre part, au moins un ensemble récepteur 14, comportant, au moins un et, de préférence, une pluralité de récepteurs de rayons lumineux disposés verticalement. Ce système est similaire par sa constitution au premier système de vision artificielle mais possède une définition beaucoup plus fine que ce dernier.

Le système de vision artificielle du module de taille rase fonctionne en transmission directe d'une manière similaire au premier système de vision artificielle. Les signaux modulés émis par un émetteur ne sont détectés que par les récepteurs correspondants suivant une fréquence déterminée. La position et la forme du cordon sont détectées lorsque des signaux émis ne sont pas perçus par les récepteurs correspondants. Ceci permet de repérer la position du contour supérieur et du contour inférieur dudit cordon. Autrement dit, le système de vision artificielle permet la détection de la localisation, dans l'espace, du cordon.

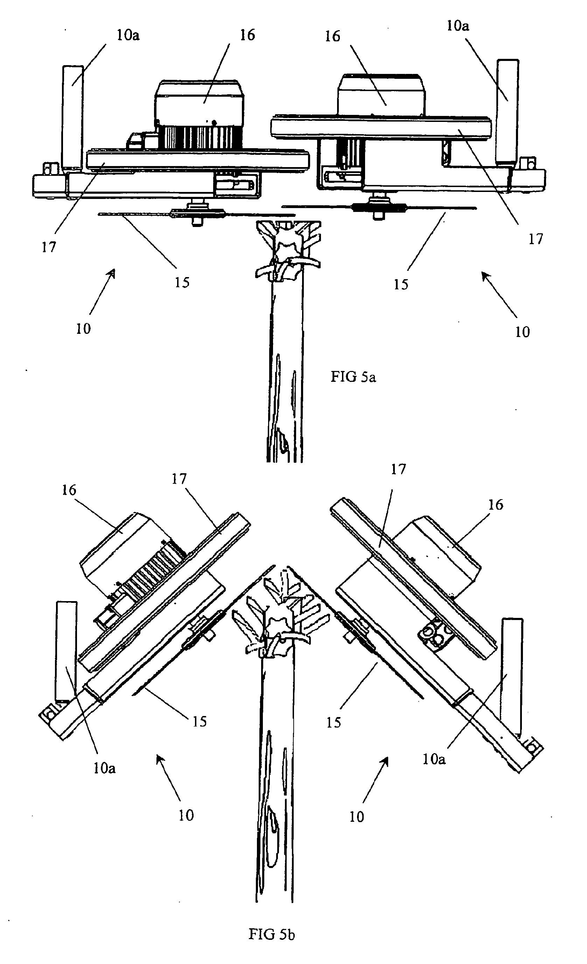

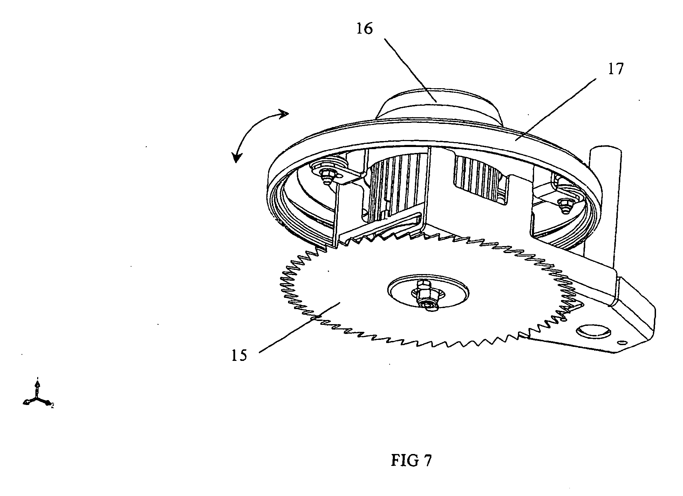

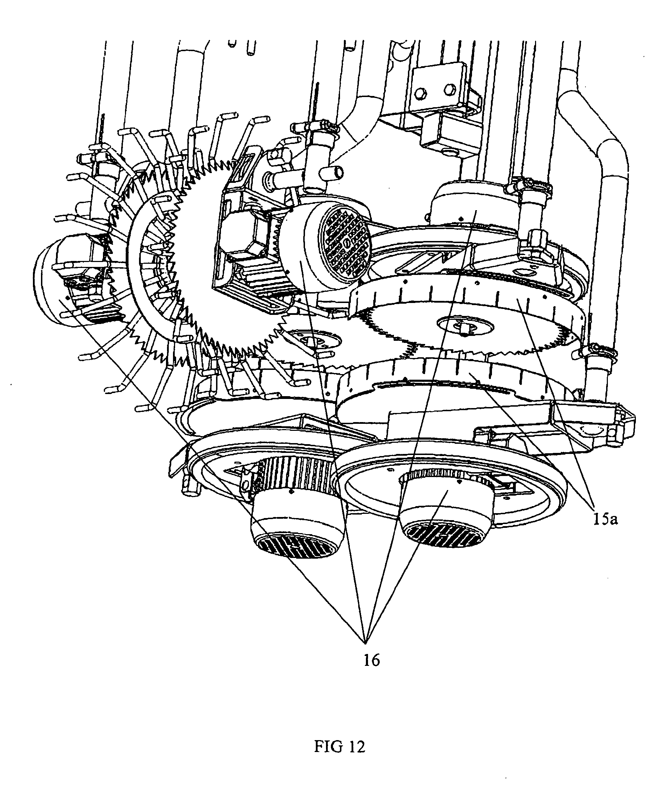

Chaque organe de coupe supérieur 10 (figures 5a, 5b et 7) comprend:
- un outil de coupe 15, par exemple constitué par une scie circulaire,
- un moteur électrique 16, assurant l'entraînement en rotation de cet outil de coupe 15,
- une roue folle ou motorisée 17, montée coaxialement à l'outil et au dessus de ce dernier à une distance de quelques centimètres, présentant un rayon légèrement supérieur au rayon d'action de l'outil de coupe 15 et permettant de contourner les piquets, cette roue 17 ayant un diamètre légèrement supérieur à celui de l'outil de coupe 15 selon l'exemple représenté (figure 7),
- un moyen de protection 15a de l'outil de coupe 15, tel que, par exemple une bavette souple, monté coaxialement à l'outil et au dessus de ce dernier (figure 12).

Les supports 10a des organes de coupe supérieurs 10 sont montés sur des articulations à rotule non représentées de sorte que les organes de coupe sont susceptibles d'être positionnés soit à l'horizontale (figure 5a), soit suivant une conformation en V renversé selon laquelle les organes de coupe forment un angle, par exemple de 45°, par rapport à l'horizontale (figure 5b). Ceci permet de couper les bois de taille qui s'étendent au dessus de l'horizontale.

De préférence, les organes de coupe supérieurs sont orientés avec un angle de dépouille de quelques degrés vers le bas et l'avant par rapport au sens d'avancement de la machine.

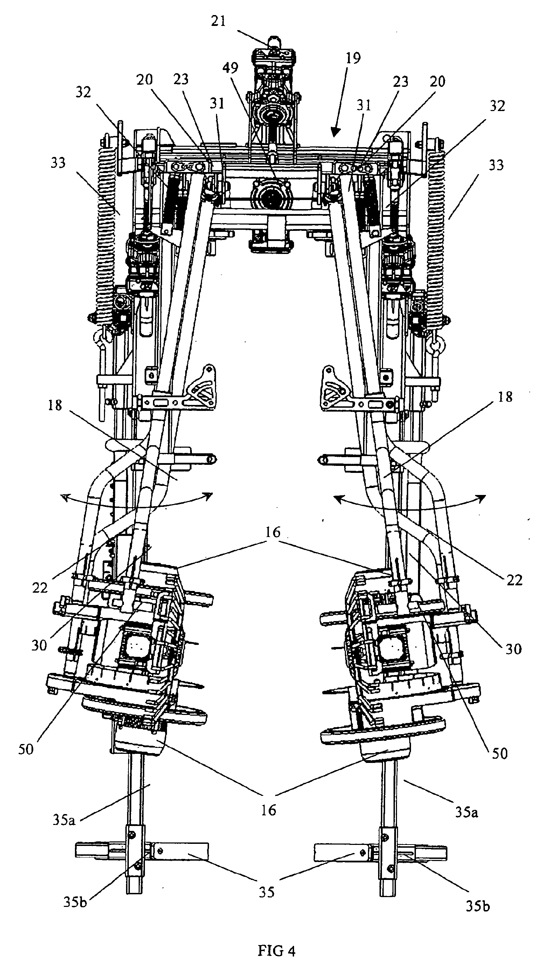

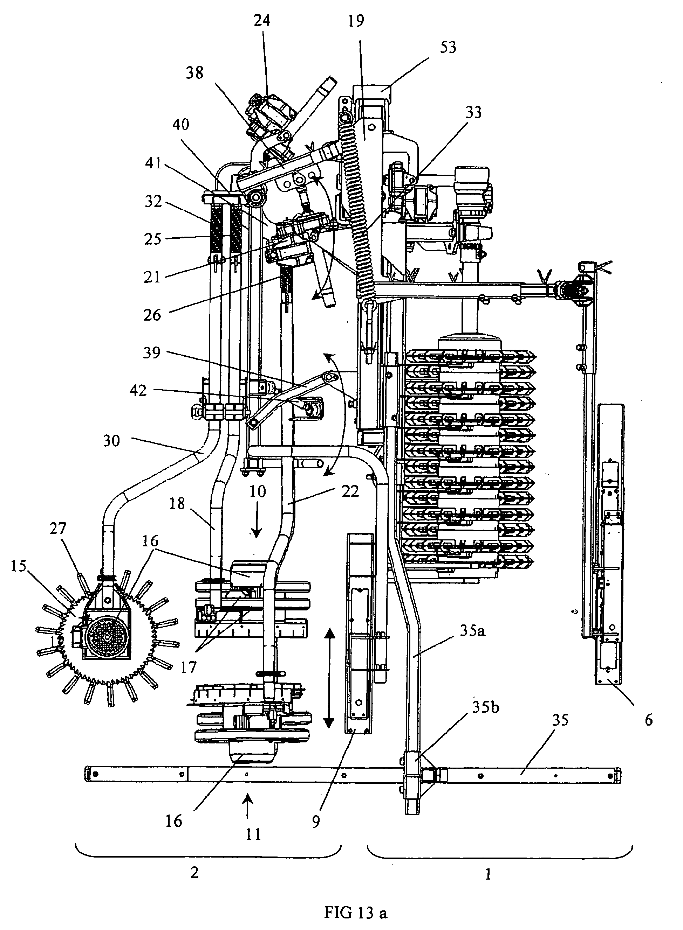

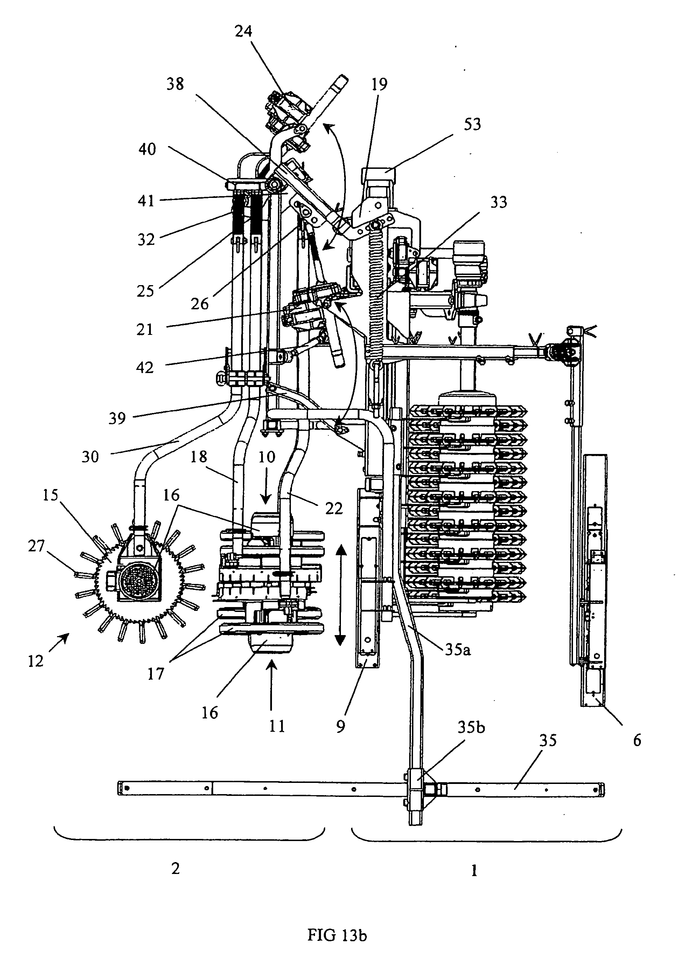

Les organes de coupe supérieurs sont supportés par des bras suspendus 18, comme le montrent les figures 13a et 13b. Les bras 18 sont articulés, en partie supérieure du bâti 19 de la machine, sur un axe 20 (figure 4).

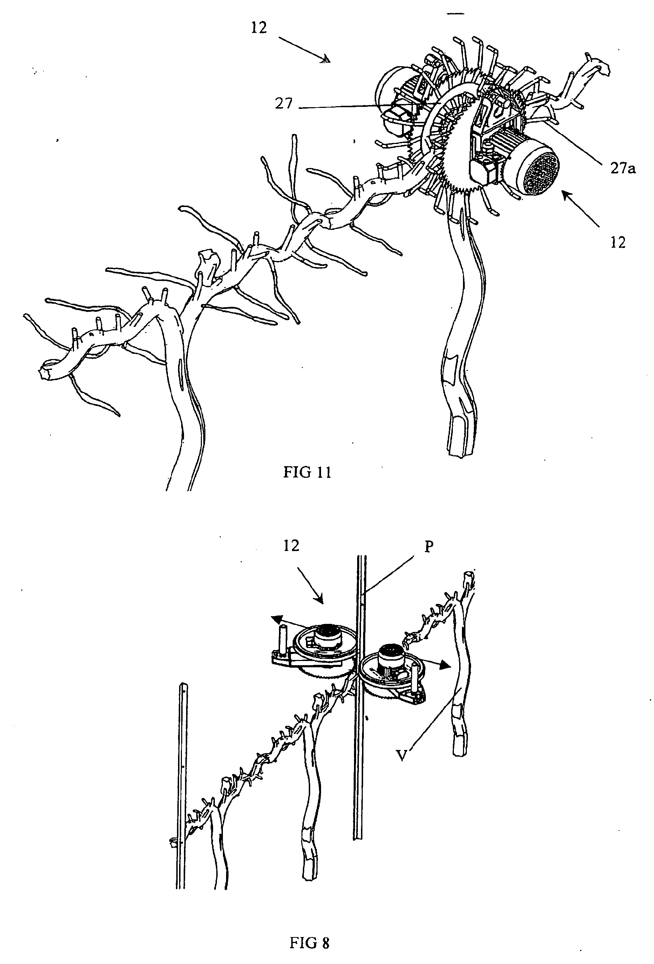

La figure 8 illustre le positionnement des organes de coupe supérieurs en situation de contournement d'un piquet. En situation de contournement d'un piquet, les roues folles ou motorisées roulent sur ce dernier et provoquent l'écartement des organes de coupe supérieurs, évitant ainsi l'endommagement dudit piquet. Le rappel automatique des organes de coupe supérieurs à leur position de travail est réalisé par des ressorts de compression 25 reliant la partie supérieure des bras 18 à un élément fixe de la partie supérieure du bâti 19 de la machine (figures 13a et 13b).

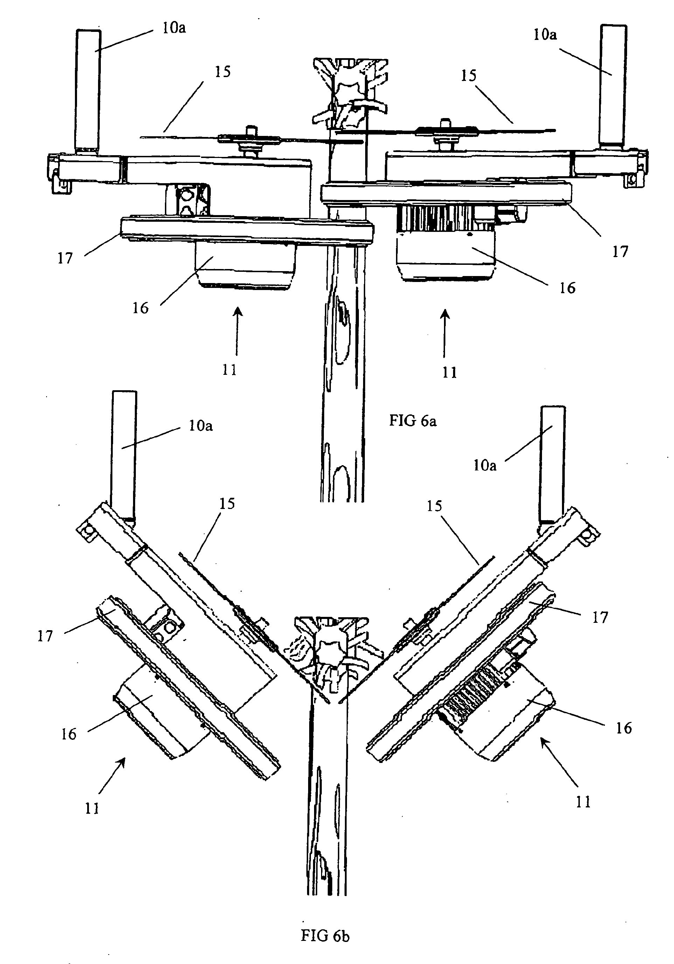

Les organes de coupe inférieurs 11 (figures 6a, 6b et 7) sont constitués de manière similaire aux organes de coupe supérieurs: chaque organe de coupe inférieur comprend un outil de coupe 15, par exemple une scie circulaire, un moteur électrique 16 assurant l'entraînement en rotation dudit outil de coupe et une roue folle ou motorisée 17, montée coaxialement à l'outil et au dessus de ce dernier à une distance de quelques centimètres, présentant un rayon légèrement supérieur au rayon d'action de l'outil de coupe 15 et permettant de contourner les piquets, cette roue 17 ayant un diamètre légèrement supérieur à celui de l'outil de coupe 15 selon l'exemple représenté (figure 7), un moyen de protection 15a de l'outil de coupe 15, tel que, par exemple une bavette souple, monté coaxialement à l'outil et au dessus de ce dernier (figure 12).

De même que pour les organes de coupe supérieurs, les supports 10a des outils de coupe des organes de coupe inférieurs 11 sont montés sur des articulations à rotule non représentées de sorte que les outils de coupe sont susceptibles d'être positionnés soit à l'horizontale (figure 6a), soit suivant une conformation en V, par exemple en faisant un angle de 45° par rapport à la verticale (figure 6b). Ceci permet de couper les bois de taille qui s'étendent en dessous du cordon.

De préférence, les organes de coupe inférieurs sont orientés avec un angle de dépouille de quelques degrés vers le haut et l'avant par rapport au sens d'avancement de la machine.

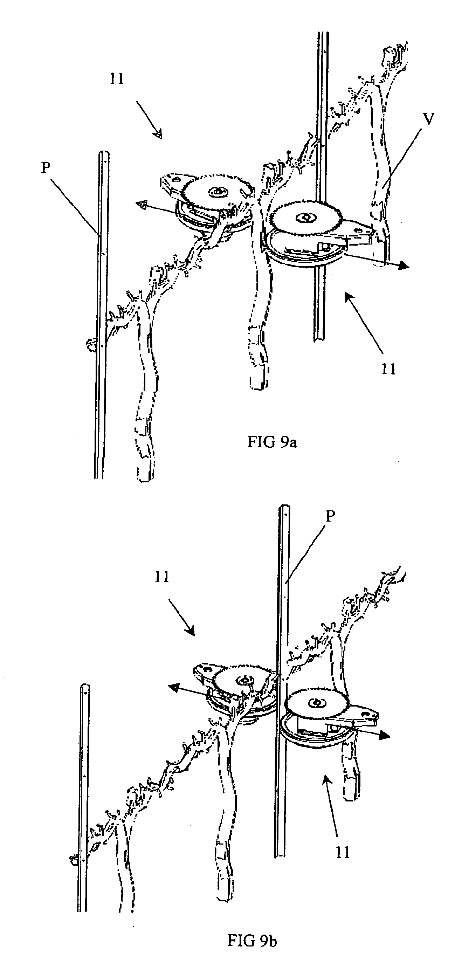

Les organes de coupe inférieurs 11 sont supportés par des bras 22 articulés sur un axe 23, comme le montre la figure 4. Les figures 9a et 9b illustrent, respectivement, le contournement d'un cep et le contournement d'un piquet par les organes de coupe inférieurs 11. En situation de contournement d'un cep ou d'un piquet, les roues folles ou motorisées desdits organes de coupe inférieurs roulent sur ledit piquet ou ledit cep et provoquent l'écartement des organes de coupe inférieurs, évitant ainsi l'endommagement dudit piquet ou dudit cep. Le rappel automatique des organes de coupe inférieurs à leur position de travail est effectué par des ressorts de compression 26 reliant la partie supérieure des bras 22 à un élément fixe de la partie supérieure du bâti 19 de la machine (figures 13a et 13b).

Les organes de coupe supérieurs 10, et/ou les organes de coupe inférieurs 11, sont montés avec une possibilité de déplacement latéral indépendant.

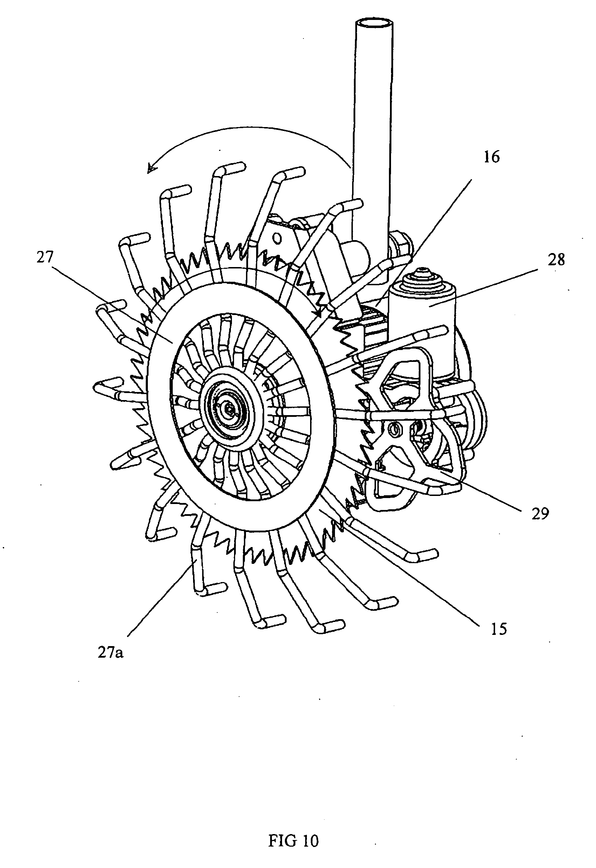

Chaque organe de coupe latéral 12 (figures 10 et 11) comprend:
- un outil de coupe 15, par exemple constitué par une scie circulaire,
- un moteur électrique 16, assurant l'entraînement en rotation de l'outil de coupe 15,
- un peigne rotatif 27, permettant de maintenir l'outil de coupe correspondant à une distance déterminée et proche du cordon sans endommager ce dernier, ce peigne rotatif étant disposé devant la face interne des outils ou lames de coupe 15 et comportant des doigts radiaux espacés présentant, de préférence, une extrémité recourbée 27a, de sorte à entourer la périphérie dentée desdits outils de coupe 15, afin de ne pas endommager les bois de taille; les organes de coupe latéraux 12 se trouvant guidés dans leur déplacement de part et d'autre du cordon par lesdits peignes rotatifs 27,
- un moteur électrique 28 assurant l'entraînement en rotation du peigne 27, par l'intermédiaire d'un pignon 29 (figure 10), de préférence dans un sens contraire au sens de rotation de la lame de coupe 15,

Les peignes 27 peuvent être entraînés en rotation à une vitesse tangentielle égale ou proche de la vitesse d'avancement de la machine en cours de travail.

Les organes de coupe latéraux 12 sont supportés par des bras suspendus 30, comme le montrent les figures 13a et 13b. Les bras 30 sont articulés, en partie supérieure du bâti 19 de la machine, sur un axe, de préférence sur le même axe sur lequel sont articulés les bras supportant les organes de coupe supérieurs.

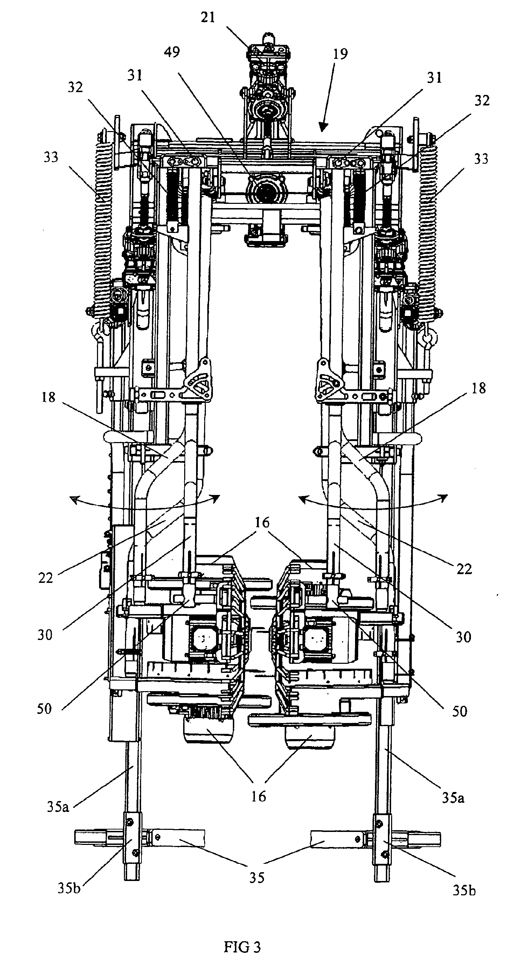

Les organes de coupe latéraux 12 sont montés avec une possibilité de déplacement latéral indépendant. D'autre part, ils sont également montés avec une possibilité d'effacement vers l'arrière et vers le haut par rapport au sens d'avancement de la machine par l'intermédiaire de pivots 50 (figure 3), en cas de rencontre d'un obstacle. Les organes de coupe latéraux peuvent être équipés de skis ou autres moyens de guidage de part et d'autre du rang de vigne.

La figure 11 illustre le positionnement des organes de coupe latéraux en situation de travail. Le maintien des organes de coupe latéraux en position de travail au plus près du cordon est effectué par des ressorts de compression 32 reliant la partie supérieure des bras 30 à un élément fixe de la partie supérieure du bâti 19 de la machine (figures 13a et 13b).

On observe que l'on peut faire varier la vitesse de rotation des outils de coupe circulaires 15 des organes de coupe 10, 11, 12 au moyen de variateurs de vitesse électriques ou hydrauliques.

Le module de taille rase comporte également deux systèmes de monte et baisse des organes de coupe supérieurs, inférieurs et latéraux, ainsi qu'il est illustré sur les figures 13a et 13b.

Le premier système de monte et baisse permet à l'ensemble des organes de coupe supérieurs, inférieurs et latéraux de se déplacer verticalement afin d'ajuster le positionnement desdits organes de coupe par rapport au dessus du cordon, à la distance prédéterminée par l'opérateur, avec une précision de quelques millimètres.
Le second système de monte et baisse permet aux organes de coupe inférieurs de se déplacer verticalement afin d'ajuster le positionnement desdits organes de coupe inférieurs par rapport au dessous du cordon, à la distance prédéterminée par l'opérateur, avec une précision de quelques millimètres.

Le premier système de monte et baisse comprend, d'une part, un parallélogramme articulé à liaisons pivots, constitué d'un bras supérieur 38, d'un bras inférieur 39, d'un bâti mobile 40 sur lequel les bras 18 et 30 sont articulés et du bâti 19 de la machine, et d'autre part, deux actionneurs électriques 21 destinés à actionner ledit parallélogramme (figures 13a, 13b).

Le second système de monte et baisse comprend, d'une part, un parallélogramme articulé à liaisons rotulées, constitué d'un bras supérieur 41, d'un bras inférieur 42, du bras 22 et du bâti 40, et d'autre part, un actionneur électrique 24 destiné à actionner ledit parallélogramme (figures 13a, 13b).

Le module de taille rase 2 comporte un système de monte et baisse permettant aux organes de coupe supérieurs 10 au-dessus des cordons de suivre lesdits cordons en hauteur avec une grande précision de quelques millimètres.

Le module de taille rase 2 comporte un système de monte et baisse permettant aux organes de coupe supérieurs 10 et aux organes de coupe latéraux 12 de se déplacer pour suivre les cordons avec une précision de quelques millimètres. Le module de taille rase 2 comporte un second système de monte et baisse permettant aux organes de coupe inférieurs 11 d'effectuer, sous les cordons, une coupe des bois à une distance précise des cordons, de quelques millimètres. Ce système comprend, par exemple, le parallélogramme 22, 40, 41, 42.

Le module de taille rase 2 comprend au moins un actionneur 49 (figure 3), électrique ou hydraulique, piloté par l'opérateur et assurant l'écartement et le rappel en position active de rapprochement des organes de coupe supérieurs 10, et/ ou des organes de coupe inférieurs 11, et/ou des organes de coupe latéraux 12 par exemple pour les entrées et sorties des rangs de vigne travaillés.

Les systèmes de monte et baisse des organes de coupe du module de taille rase sont asservis par le système électronique d'analyse et de commande de la machine.

Les actionneurs électriques ou hydrauliques 21, 24 des systèmes de monte et baisse sont assistés par des ressorts 33 (figures 13a, 13b).

La machine comprend également des moyens de centrage, permettant de la positionner par rapport aux pieds de vigne et aux piquets. Ces moyens de centrage sont, par exemple, constitués par des skis 35 espacés, disposés horizontalement ou approximativement horizontalement de part et d'autre du plan vertical médian de travail de la machine, au-dessous des organes de coupe de celles-ci. Ces skis 35 sont par exemple fixés à la partie inférieure de jambes 35a solidaires du bâti du module de prétaillage de la machine, par exemple à l'aide de moyens d'attache connus en soi 35b permettant leur réglage en hauteur et en écartement (figures 3 et 13a).

En cours de travail, ces skis 35 s'appuient et glissent sur les ceps ou les piquets, de sorte que cet agencement permet de limiter les oscillations latérales de la machine occasionnées par l'instabilité du véhicule porteur due aux irrégularités du sol.

Le système électronique d'analyse et de commande de la machine est configuré pour permettre de traiter les informations transmises par les systèmes de vision artificielle 6 et 9 du module de prétaillage 1 et du module de taille rase 2, respectivement, et pour commander le positionnement des organes de coupe de ces modules, en fonction de la position et de la conformation des piquets P, des pieds de vigne V et des cordons C.

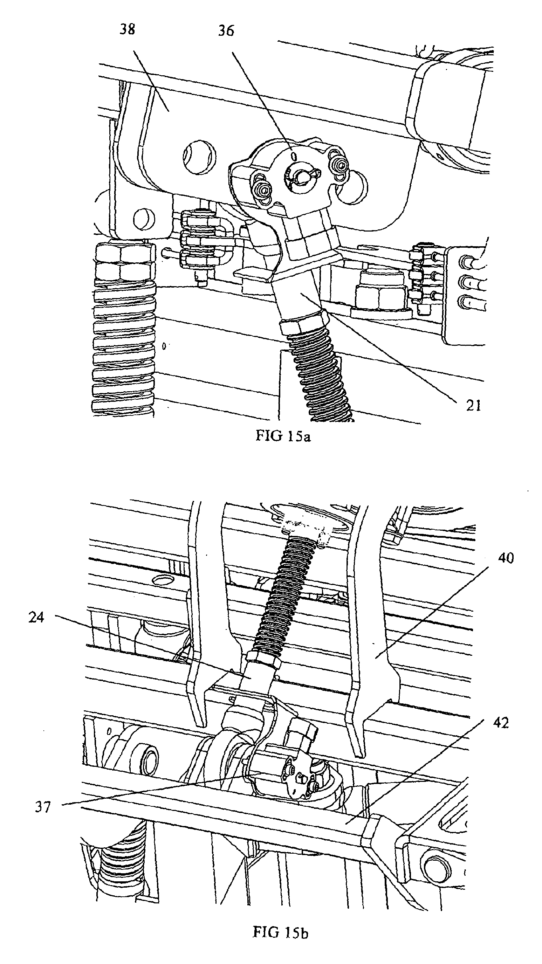

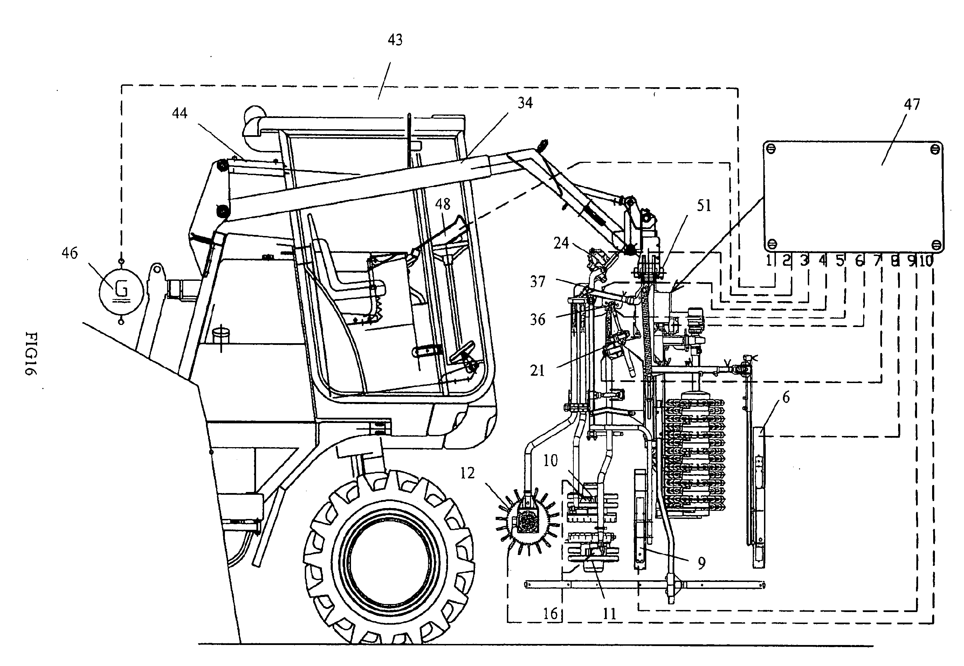

Notamment, le système électronique est configuré:
- pour analyser et traiter les informations transmises par le système de vision artificielle 6 du module de prétaillage 1, et, sur la base de ces informations:
   o mesurer la vitesse d'avancement de la machine à partir du repérage de la position des bois de prétaille à des instants donnés, de repérer les piquets du rang de vigne et de détecter la position du cordon,
   o après avoir défini la vitesse d'avancement de la machine, ajuster la vitesse d'entraînement en rotation des ensembles de coupe du module de prétaillage jusqu'à ce que lesdits ensembles tournent à une vitesse de rotation développée proche de la vitesse d'avancement de la machine,
   o commander le positionnement des ensembles de coupe du module de prétaillage et du module de taille au dessus du cordon à une distance préétablie par l'opérateur, en déclenchant l'action du vérin 44 (figure 16) qui assure les mouvements verticaux des ensembles de coupe du module de prétaillage et du module de taille,
   o déclencher l'action du vérin qui assure les mouvements d'écartement, lors de l'évitement d'un piquet, à l'entrée et à la sortie d'un rang, et du rapprochement des ensembles de coupe du module de prétaillage en position de travail,
- pour analyser et traiter les informations transmises par le système de vision artificielle 9 du module de taille rase 2 et sur la base de ces informations,
   o commander le positionnement des organes de coupe de ce module autour du cordon avec la précision requise pour obtenir une "taille rase de précision",
   o commander le positionnement des organes de coupe 10, 11, 12 du deuxième module 2 en fonction des paramètres de vitesse de déplacement de la machine et de prédétermination, par l'opérateur, de la distance de coupe par rapport au cordon,
   o commander l'action des actionneurs électriques 21, après détection du contour supérieur du cordon par le second système de vision artificielle, pour ajuster le positionnement de l'ensemble des organes de coupe supérieurs, inférieurs et latéraux par rapport au dessus du cordon à une distance préprogrammée par l'opérateur (figures 13a, 13b). Les actionneurs électriques 21 sont pourvus de capteurs de position 36 (figure 15a) qui participent aux asservissements desdits actionneurs,
   o commander l'action de l'actionneur électrique 24, après détection du contour inférieur du cordon par le second système de vision artificielle, pour ajuster le positionnement de l'ensemble des organes de coupe inférieurs par rapport au dessous du cordon à une distance préprogrammée par l'opérateur (figures 13a, 13b). L'actionneur électrique 24 est pourvu d'un capteur de position 37 (figure 15b) qui participe à l'asservissement dudit actionneur.

La machine est montée sur un véhicule porteur 43, de préférence à l'avant de ce dernier. Elle peut être, par exemple, suspendue à l'extrémité d'un bras porteur articulé 34, de préférence orientable, lui-même supporté par le châssis d'un véhicule qui peut être tracté ou automoteur, et dont la partie mobile est reliée à un vérin 44 permettant de lui communiquer des mouvements ascendants ou descendants, de sorte à faire monter ou descendre ladite machine, ainsi qu'il est représenté sur la figure 16.

Le véhicule sur lequel est montée la machine comporte, d'une part, la source d'alimentation générale 46 du coffret de commande automatique 47 contenant le système électronique d'analyse et de commande de la machine, et, d'autre part, un pupitre de commande 48 permettant à l'opérateur d'effectuer le réglage des paramètres de prétaillage et de taille, d'actionner les moteurs électriques 16 des outils de coupe 15 et de commander directement l'ensemble des automatismes.

De ce coffret, partent notamment, ainsi qu'il est illustré sur la figure 16 :
- une liaison L1 à l'alimentation générale 46,
- une liaison L2 au pupitre de commande 48,
- une liaison L3 à l'actionneur 24 du système de monte et baisse des organes de coupe inférieurs,
- une liaison L4 au capteur de position 37 de l'actionneur 24,
- une liaison L5 aux actionneurs 21 du système de monte et baisse des organes de coupe supérieurs, latéraux et inférieurs,
- une liaison L6 aux capteurs de position 36 des actionneurs 21,
- une liaison L7 au système de vision artificielle 6 du module de prétaillage,
- une liaison L8 au système de vision artificielle 9 du module de taille rase,
- une liaison L9 aux moteurs électriques 16 des organes de coupe 10, 11 et 12,
- une liaison L10 à l'actionneur 49 permettant l'ouverture et la fermeture des organes de coupe en entrée et en sortie de rang.

## Revendications

1. Procédé de taille automatique de la vigne cultivée selon le mode de conduite en cordon dit "en cordon de Royat" suivant lequel au moins un cordon, est fixé sur un fil porteur approximativement horizontal, ou sensiblement parallèle au sol, procédé **caractérisé en ce que** l'on effectue les opérations suivantes: - prétaillage d'au moins la totalité des bois s'élevant au-dessus des cordons au moyen d'un premier module de coupe permettant d'extraire du palissage les bois coupés résultant de ce prétaillage; - localisation, dans l'espace, des cordons au moyen d'au moins un système de reconnaissance de position, et utilisation des informations recueillies par ledit système pour commander le positionnement des organes de coupe d'un deuxième module de coupe travaillant à la suite dudit premier module de prétaillage pour réaliser une coupe rase des bois de taille restants issus de la périphérie du cordon, à une courte distance prédéterminée par rapport audit cordon.

2. Machine de taille automatique de la vigne cultivée selon le mode de conduite en cordon dit "en cordon de Royat", **caractérisée en ce qu'**elle comprend deux modules montés sur un châssis commun, disposés à la suite l'un de l'autre en considérant le sens d'avancement de ladite machine, en cours de travail, à savoir: d'une part, un premier module de prétaillage (1), du genre comprenant deux ensembles de coupe (3) évoluant de part et d'autre du rang de vigne et, d'autre part, un deuxième module de taille rase (2) comportant des organes de coupe (10, 11, 12) et au moins un système de reconnaissance de position agencé ou configuré pour permettre la localisation, dans l'espace, des cordons et, pour commander le positionnement des organes de coupe de ce deuxième module (10, 11, 12) pour réaliser une coupe rase des bois de taille restants issus de la périphérie du cordon, à une courte distance prédéterminée par rapport audit cordon.

3. Procédé selon la revendication 1, **caractérisé en ce que** la détection de la localisation, dans l'espace, du cordon est opérée au moyen d'au moins un système de vision artificielle.

4. Procédé selon l'une des revendications 1 ou 3, **caractérisé en ce que** l'analyse des informations communiquées par le système de reconnaissance et la commande du positionnement des organes de coupe sont réalisées par un système électronique.

5. Procédé selon l'une quelconque des revendications 1, 3 ou 4, **caractérisé en ce que** le système de détection de la localisation, dans l'espace, du cordon permet de définir la vitesse de déplacement de la machine.

6. Procédé selon l'une quelconque des revendications 1 ou 3 à 5, **caractérisé en ce que** le système électronique commande le positionnement des organes de coupe (10, 11, 12) du deuxième module (2) en fonction des paramètres de vitesse de déplacement de la machine et de prédétermination, par l'opérateur, de la distance de coupe par rapport au cordon.

7. Procédé selon l'une quelconque des revendications 1 ou 3 à 6, **caractérisé en ce que** les organes de coupe latéraux (12) du deuxième module (2) sont guidés dans leurs déplacements de part et d'autre du cordon par des peignes rotatifs (27).

8. Machine selon la revendication 2, **caractérisée en ce que** le système de reconnaissance de position comprend au moins un système de vision artificielle (9), permettant la localisation, dans l'espace, du cordon (C).

9. Machine selon l'une des revendications 2 ou 8, **caractérisée en ce que** le système de reconnaissance de position comprend un système électronique d'analyse permettant de détecter et de suivre les contours supérieurs et inférieurs du cordon (C).

10. Machine selon l'une quelconque des revendications 2, 8 ou 9, **caractérisée en ce que** le système de reconnaissance de position est agencé ou configuré pour définir la vitesse de déplacement de la machine.

11. Machine selon l'une quelconque des revendications 2 où 8 à 10, **caractérisée en ce que** le système de reconnaissance comporte un système électronique d'analyse et de commande permettant de commander les actionneurs de positionnement des organes de coupe (10, 11, 12) du deuxième module (2) et de suivre les contours du cordon (C) à une distance prédéterminée.

12. Machine selon l'une quelconque des revendications 2 ou 8 à 11, **caractérisée en ce que** le module de taille rase (2) comporte au moins deux organes de coupe supérieurs (10) destinés à évoluer au-dessus des cordons, ces organes de coupe supérieurs (10) étant disposés horizontalement ou selon une configuration en V renversé, de préférence avec un angle de dépouille de quelques degrés vers le bas et l'avant par rapport au sens d'avancement.

13. Machine selon la revendication 12, **caractérisée en ce que** le module de taille rase (2) comprend des moyens assurant l'écartement automatique et le rappel automatique en position active de rapprochement des organes de coupe supérieurs (10) au passage des piquets du palissage et, si nécessaire, au passage des ceps, dans le cas de double cordons superposés.

14. Machine selon la revendication 12, **caractérisée en ce que** le module de taille rase (2) comprend au moins un actionneur (49) électrique ou hydraulique piloté par l'opérateur assurant l'écartement et le rappel en position active de rapprochement des organes de coupe supérieurs (10), par exemple pour les entrées et sorties des rangs travaillés.

15. Machine selon l'une quelconque des revendications 12, 13 ou 14, **caractérisée en ce que** les organes de coupe supérieurs (10) sont montés avec une possibilité de déplacement latéral indépendant.

16. Machine selon l'une quelconque des revendications 2 ou 8 à 15, **caractérisée en ce que** le module de taille rase (2) comporte au moins deux organes de coupe inférieurs (11) destinés à évoluer en dessous des cordons, ces organes de coupe inférieurs (11) étant disposés horizontalement ou selon une configuration en V, de préférence avec un angle de dépouille de quelques degrés vers le haut et l'avant par rapport au sens d'avancement.

17. Machine selon la revendication 16, **caractérisée en ce que** le module de taille rase (2) comprend des moyens assurant l'écartement automatique et le rappel automatique en position active de rapprochement des organes de coupe inférieurs (11) au passage des piquets du palissage et au passage des ceps.

18. Machine selon la revendication 16, **caractérisée en ce que** le module de taille rase (2) comprend des actionneurs (49) électriques ou hydrauliques pilotés par l'opérateur assurant l'écartement et le rappel en position active de rapprochement des organes de coupe inférieurs (11), par exemple pour les entrées et sorties des rangs travaillés.

19. Machine selon l'une quelconque des revendications 16, 17 ou 18, **caractérisée en ce que** les organes de coupe inférieurs (11) sont montés avec une possibilité de déplacement latéral indépendant.

20. Machine selon l'une des revendications 13 ou 17, **caractérisée en ce que** les moyens assurant l'écartement automatique des organes de coupe supérieurs (10) et/ou inférieurs (11) sont constitués par des roues folles ou motorisées (17), ces roues ayant un rayon légèrement supérieur au rayon d'action des outils de coupe (15).

21. Machine selon l'une quelconque des revendications 2 ou 8 à 20, **caractérisée en ce que** le module de taille rase (2) comprend au moins deux organes de coupe latéraux (12) destinés à évoluer de part et d'autre des cordons.

22. Machine selon la revendication 21, **caractérisée en ce que** des peignes rotatifs (27) sont disposés devant la face interne des organes de coupe latéraux (12).

23. Machine selon la revendication 22, **caractérisée en ce que** les peignes rotatifs (27) comportent des doigts recourbés (27a), disposés autour du bord de coupe des organes de coupe latéraux (12).

24. Machine selon l'une quelconque des revendications 21 à 23, **caractérisée en ce que** les organes de coupe latéraux (12) du module de taille rase (2) sont montés avec une possibilité de déplacement latéral indépendant.

25. Machine selon l'une quelconque des revendications 21 à 24, **caractérisée en ce que** les organes de coupe latéraux (12) du module de taille rase (2) sont montés avec une possibilité d'effacement vers l'arrière et vers le haut par rapport au sens d'avancement.

26. Machine selon l'une quelconque des revendications 21 à 25, **caractérisée en ce que** les organes de coupe latéraux (12) du module de taille rase (2) sont équipés de skis de guidage.

27. Machine selon l'une quelconque des revendications 2 ou 8 à 26, **caractérisée en ce que** les organes de coupe (10, 11, 12) du module de taille rase (2) comportent des outils de coupe circulaires (15), par exemple des lames de scies circulaires.

28. Machine selon l'une quelconque des revendications 2, ou 8 à 27, **caractérisée en ce que** les outils de coupe circulaires (15) des organes de coupe (10, 11, 12) sont entraînés indépendamment par des moteurs (16), par exemple, par des moteurs électriques ou hydrauliques.

29. Machine selon l'une quelconque des revendications 2 ou 12 à 28, **caractérisée en ce que** le module de taille rase (2) comporte un système de monte et baisse permettant à l'ensemble des organes de coupe supérieurs (10), latéraux (12) et inférieurs (11) de se déplacer pour suivre les cordons avec une précision de quelques millimètres.

30. Machine selon l'une quelconque des revendications 2 ou 12 à 29, **caractérisée en ce que** le module de taille rase (2) comporte un système de monte et baisse permettant aux organes de coupe supérieurs (10) au-dessus des cordons de suivre lesdits cordons en hauteur avec une grande précision de quelques millimètres.

31. Machine selon l'une quelconque des revendications 2 ou 12 à 30, **caractérisée en ce que** le module de taille rase (2) comporte un système de monte et baisse permettant aux organes de coupe supérieurs (10) et aux organes de coupe latéraux (12) de se déplacer pour suivre les cordons avec une précision de quelques millimètres.

32. Machine selon l'une quelconque des revendications 16 à 31, **caractérisée en ce que** le module de taille rase (2) comporte un système de monte et baisse permettant aux organes de coupe inférieurs (11) d'effectuer, sous les cordons, une coupe des bois à une distance précise des cordons, de quelques millimètres.

33. Machine selon l'une quelconque des revendications 29 à 32, **caractérisée en ce que** les systèmes de monte et baisse des organes de coupe du module de taille rase (2) sont asservis par le système électronique d'analyse et de commande de la machine.

34. Machine selon l'une quelconque des revendications 29 à 33, **caractérisée en ce que** les systèmes de monte et baisse des organes de coupe du module de taille rase (2) comprennent des actionneurs électriques ou hydrauliques (21, 24).

35. Machine selon l'une quelconque des revendications 29 à 34, **caractérisée en ce que** les actionneurs électriques ou hydrauliques (21, 24) des systèmes de monte et baisse des organes de coupe du module de taille rase (2) sont assistés par des ressorts (33).

36. Machine selon la revendication 35, **caractérisée en ce que** les actionneurs (21, 24) des organes de coupe (10, 11, 12) sont pourvus de capteurs de position (36, 37) qui participent aux asservissements desdits actionneurs.

37. Machine selon l'une quelconque des revendications 2 ou 8 à 36, **caractérisée en ce qu'**elle comprend des moyens de centrage, permettant de la positionner par rapport aux pieds de vigne (V) et aux piquets (P).

38. Machine selon la revendication 37, **caractérisée en ce que** les moyens de centrage sont constitués par des skis de guidage (35) espacés, disposés horizontalement ou approximativement horizontalement de part et d'autre du plan vertical médian de travail de la machine.

39. Machine selon l'une quelconque des revendications 2 ou 8 à 38, comprenant un véhicule porteur (43), **caractérisée en ce que** le châssis (19) de ladite machine comprend un moyen de suspension (53) par l'intermédiaire duquel elle est montée à l'extrémité d'un bras porteur (34) dudit véhicule.

## Claims

1. Method for automatic pruning of vines grown according to the cordon-training method known as the "Royat cordon", according to which at least one cordon is affixed to a carrier wire, either approximately horizontal or essentially parallel to the ground, said method **characterised in that** the following operations are carried out: - pre-pruning of at least all the wood extending above the cordons using a first cutting module to remove from a railing cut stocks resulting from said pre-pruning; - spatial localisation of the cordons by means of at least one position recognition system, and use of the data collected by said system to control the positioning of the cutting members of a second cutting module working behind said first pre-pruning module in order to achieve a clear cut of the remaining prunings from a periphery of the cordon, at a predetermined short distance in relation to said cordon.

2. Machine for automatic pruning of vines grown according to the cordon-training method known as the "Royat cordon", **characterised in that** it comprises two modules mounted on a common chassis, arranged one behind the other in the direction of forward travel of said machine, while operating, i.e. on the one hand, a first pre-pruning module (1) of the type comprising two cutting assemblies (3) moving on both sides of the row of vines; and on the other hand, a second short pruning module (2) comprising cutting members (10, 11, 12) and at least one position recognition system arranged or configured to allow for the spatial localisation of the cordons and to control the positioning of the cutting members of this second module (10, 11, 12) in order to achieve a clear cut of the remaining prunings from the periphery of the cordon, at a predetermined short distance in relation to said cordon.

3. Method according to claim 1, **characterised in that** detection of the spatial localisation of the cordon is performed by means of at least one artificial vision system.

4. Method according to one of claims 1 or 3, **characterised in that** an electronic system both analyses the data transmitted by the recognition system and controls the positioning of the cutting members.

5. Method according to any one of claims 1, 3 or 4, **characterised in that** the system for detecting the spatial localisation of the cordon enables the rate of travel of the machine to be determined.

6. Method according to any one of claims 1 or 3 to 5, **characterised in that** the electronic system controls the positioning of the cutting members (10, 11, 12) of the second module (2) depending on the parameters of the rate of travel of the machine and of predetermination, by the operator, of the cutting distance in relation to the cordon.

7. Method according to any one of claims 1 or 3 to 6, **characterised in that** the lateral cutting members (12) of the second module (2) are guided in their movements on both sides of the cordon by rotary combs (27).

8. Machine according to claim 2, **characterised in that** the position recognition system comprises at least one artificial vision system (9), permitting the spatial localisation of the cordon (C).

9. Machine according to one of claims 2 or 8, **characterised in that** the position recognition system comprises an electronic analysis system enabling the upper and lower contours of the cordon (C) to be detected and followed.

10. Machine according to any one of claims 2, 8 or 9, **characterised in that** the position recognition system is arranged or configured to define the rate of travel of the machine.

11. Machine according to any one of claims 2 or 8 to 10, **characterised in that** the recognition system comprises an electronic analysis and control system enabling the positioning actuators of the cutting members (10, 11, 12) of the second module (2) to be controlled and to follow the contours of the cordon (C) at a predetermined distance.

12. Machine according to any one of claims 2 or 8 to 11, **characterised in that** the short pruning module (2) comprises at least two upper cutting members (10) designed to move above the cordons, said upper cutting members (10) being arranged horizontally or in an inverted V configuration, preferably with a clearance angle of a few degrees downward and forward in relation to the direction of travel.

13. Machine according to claim 12, **characterised in that** the short pruning module (2) comprises means to ensure automatic separation and automatic return to active close position of the upper cutting members (10) when going over railing posts, and, if necessary, when going over vines, in the case of superimposed double cordons.

14. Machine according to claim 12, **characterised in that** the short pruning module (2) comprises at least one electric or hydraulic actuator (49) controlled by the operator to ensure the separation and return to active close position of the upper cutting members (10), for example when entering or exiting the rows being worked.

15. Machine according to any one of claims 12, 13 or 14, **characterised in that** the upper cutting members (10) are mounted with independent lateral movement capability.

16. Machine according to any one of claims 2 or 8 to 15, **characterised in that** the short pruning module (2) comprises at least two lower cutting members (11) designed to move below the cordons, said lower cutting members (11) being arranged horizontally or according to a V configuration, preferably with a clearance angle of a few degrees upward and forward in relation to the direction of travel.

17. Machine according to claim 16, **characterised in that** the short pruning module (2) comprises means to ensure automatic separation and automatic return to active close position of the lower cutting members (11) when going over railing posts, and when going over vines.

18. Machine according to claim 16, **characterised in that** the short pruning module (2) comprises electric or hydraulic actuators (49) controlled by the operator to ensure the separation and return to active close position of the lower cutting members (11) when entering or exiting the rows being worked.

19. Machine according to any one of claims 16, 17 or 18, **characterised in that** the lower cutting members (11) are mounted with independent lateral movement capability.

20. Machine according to one of claims 13 or 17, **characterised in that** means to ensure automatic separation of the upper cutting members (10) and/or the lower cutting members (11) are composed of idler or motorised wheels (17), said wheels having a radius slightly greater than the radius of action of the cutting tools (15).

21. Machine according to any one of claims 2 or 8 to 20, **characterised in that** the short pruning module (2) comprises at least two lateral cutting members (12) moveable on both sides of the cordons.

22. Machine according to claim 21, **characterised in that** rotary combs (27) are arranged in front of the internal face of the lateral cutting members (12).

23. Machine according to claim 22, **characterised in that** the rotary combs (27) have curved fingers (27a), arranged around the cutting edge of the lateral cutting members (12).

24. Machine according to any one of claims 21 to 23, **characterised in that** the lateral cutting members (12) of the short pruning module (2) are mounted with independent lateral movement capability.

25. Machine according to any one of claims 21 to 24, **characterised in that** the lateral cutting members (12) of the short pruning module (2) are mounted with the capability to retract backward and upward in relation to the direction of travel.

26. Machine according to any one of claims 21 to 25, **characterised in that** the lateral cutting members (12) of the short pruning module (2) are equipped with guidance skis.

27. Machine according to any one of claims 2 or 8 to 26, **characterised in that** the cutting members (10, 11, 12) of the short pruning module (2) have circular cutting tools (15), for example circular saw blades.

28. Machine according to any one of claims 2 or 8 to 27, **characterised in that** the circular cutting tools (15) of the cutting members (10, 11, 12) are driven independently by motors (16), for example electric or hydraulic motors.

29. Machine according to any one of claims 2 or 12 to 28, **characterised in that** the short pruning module (2) comprises a raising and lowering system enabling the assembly of the upper cutting members (10), the lateral cutting members (12) and the lower cutting members (11) to move in order to follow the cordons to an accuracy of a few millimetres.

30. Machine according to any one of claims 2 or 12 to 29, **characterised in that** the short pruning module (2) comprises a raising and lowering system enabling the upper cutting members (10) above the cordons to follow said cordons with a high precision of a few millimetres in terms of height.

31. Machine according to any one of claims 2 or 12 to 30, **characterised in that** the short pruning module (2) comprises a raising and lowering system enabling the upper cutting members (10) and the lateral cutting members (12) to move in order to follow the cordons with a precision of a few millimetres.

32. Machine according to any one of claims 16 to 31, **characterised in that** the short pruning module (2) comprises a raising and lowering system enabling the lower cutting members (11) to cut the wood below the cordons at a precise distance from the cordons of a few millimetres.

33. Machine according to any one of claims 29 to 32, **characterised in that** the raising and lowering systems of the cutting members of the short pruning module (2) are controlled by the electronic analysis and control system of the machine.

34. Machine according to any one of claims 29 to 33, **characterised in that** the raising and lowering systems of the cutting members on the short pruning module (2) comprise electric or hydraulic actuators (21, 24).

35. Machine according to any one of claims 29 to 34, **characterised in that** the electric or hydraulic actuators (21, 24) of the raising and lowering systems for the cutting members on the short pruning module (2) are assisted by springs (33).

36. Machine according to claim 35, **characterised in that** the actuators (21, 24) of the cutting members (10, 11, 12) are equipped with position sensors (36, 37) participating in the control systems of said actuators.

37. Machine according to any one of claims 2 or 8 to 36, **characterised in that** it comprises centring means, enabling it to be positioned in relation to the vinestocks (V) and to the posts (P).

38. Machine according to claim 37, **characterised in that** the centring means comprise spaced-out guidance skis (35), arranged horizontally or approximately horizontally on both sides of the vertical median working plane of the machine.

39. Machine according to any one of claims 2 or 8 to 38, comprising a carrier vehicle (43), **characterised in that** the chassis (19) of said machine comprises a means of suspension (53), by means of which it is mounted at the end of a carrier arm (34) of said vehicle.

## Patentansprüche

1. Verfahren zum automatischen Beschneiden von Reben, die gemäß dem als "Cordon de Royal" bezeichneten Spalierdrahtführungsmodus angebaut sind, gemäß dem mindestens ein Spalierdraht an einem annähernd horizontalen oder im Wesentlichen zum Boden parallelen Trägerdraht befestigt ist, wobei das Verfahren **dadurch gekennzeichnet ist, dass** die folgenden Vorgänge ausgeführt werden: - Vorschneiden von mindestens der Gesamtheit der Hölzer, die sich über die Spalierdrähte hinaus erstrecken, mithilfe eines ersten Schneidemoduls, das gestattet, die aus diesem Vorschnitt resultierenden geschnittenen Hölzer aus dem Spalier herauszuziehen; - räumliche Ortsbestimmung der Spalierdrähte mittels mindestens eines Positionserkennungssystems und Verwendung der von dem System gesammelten Informationen, um die Positionierung der Schneideorgane eines zweiten Schneidemoduls zu steuern, das nach dem ersten Vorschneidemodul arbeitet, um einen Kurzschnitt der restlichen, aus der Peripherie des Spalierdrahts stammenden größeren Hölzer in einem in Bezug auf den Spalierdraht kurzen vorbestimmten Abstand auszuführen.

2. Maschine zum automatischen Beschneiden von Reben, die gemäß dem als "Cordon de Royal" bezeichneten Spalierdrahtführungsmodus angebaut sind, **dadurch gekennzeichnet, dass** sie zwei auf einem gemeinsamen Rahmen angebrachte Module umfasst, die in Bezug auf die Vorschubrichtung der Maschine während der Arbeit hintereinander angeordnet sind, und zwar: einerseits ein erstes Vorschneidemodul (1) der Art, die zwei Schneideeinheiten (3) umfasst, die zu beiden Seiten der Rebenreihe Bewegungen ausführen, und andererseits ein zweites Kurzschnittmodul (2), das Schneideorgane (10, 11, 12) und mindestens ein Positionserkennungssystem umfasst, das so angeordnet oder konfiguriert ist, dass es die räumliche Ortsbestimmung der Spalierdrähte gestattet und die Positionierung der Schneideorgane (10, 11, 12) dieses zweiten Moduls steuert, um einen Kurzschnitt der aus der Peripherie des Spalierdrahts stammenden größeren Hölzer in einem in Bezug auf den Spalierdraht kurzen vorbestimmten Abstand auszuführen.

3. Verfahren nach Anspruch 1, **dadurch gekennzeichnet, dass** die Erfassung der räumlichen Ortsbestimmung des Spalierdrahts mithilfe eines künstlichen Sichtsystems erfolgt.

4. Verfahren nach einem der Ansprüche 1 oder 3, **dadurch gekennzeichnet, dass** die Analyse der vom Erkennungssystem übertragenen Informationen und die Steuerung der Positionierung der Schneideorgane durch ein elektronisches System ausgeführt werden.

5. Verfahren nach einem der Ansprüche 1, 3 oder 4, **dadurch gekennzeichnet, dass** das Erfassungssystem zur räumlichen Ortsbestimmung des Spalierdrahts gestattet, die Bewegungsgeschwindigkeit der Maschine zu definieren.

6. Verfahren nach einem der Ansprüche 1 oder 3 bis 5, **dadurch gekennzeichnet, dass** das elektronische System die Positionierung der Schneideorgane (10, 11, 12) des zweiten Moduls (2) in Abhängigkeit von den Bewegungsgeschwindigkeitsparametern der Maschine und der Vorbestimmung des Schneideabstands in Bezug auf den Spalierdraht durch den Bediener steuert.

7. Verfahren nach einem der Ansprüche 1 oder 3 bis 6, **dadurch gekennzeichnet, dass** die seitlichen Schneideorgane (12) des zweiten Moduls (2) in ihren Bewegungen zu beiden Seiten des Spalierdrahts durch sich drehende Kämme (27) geführt werden.

8. Maschine nach Anspruch 2, **dadurch gekennzeichnet, dass** das Positionserkennungssystem mindestens ein künstliches Sichtsystem (9) umfasst, das die räumliche Ortsbestimmung des Spalierdrahts (C) gestattet.

9. Maschine nach einem der Ansprüche 2 oder 8, **dadurch gekennzeichnet, dass** das Positionserkennungssystem ein elektronisches Analysesystem umfasst, das gestattet, die oberen und unteren Konturen des Spalierdrahts (C) zu erfassen und ihnen zu folgen.

10. Maschine nach einem der Ansprüche 2, 8 oder 9, **dadurch gekennzeichnet, dass** das Positionserkennungssystem so angeordnet oder konfiguriert ist, dass es die Bewegungsgeschwindigkeit der Maschine definiert.

11. Maschine nach einem der Ansprüche 2 oder 8 bis 10, **dadurch gekennzeichnet, dass** das Erkennungssystem ein elektronisches Analyse- und Steuersystem umfasst, das gestattet, die Positionierungsaktuatoren der Schneideorgane (10, 11, 12) des zweiten Moduls (2) zu steuern und den Konturen des Spalierdrahts (C) in einem vorgegebenen Abstand zu folgen.

12. Maschine nach einem der Ansprüche 2 oder 8 bis 11, **dadurch gekennzeichnet, dass** das Kurzschnittmodul (2) mindestens zwei obere Schneideorgane (10) umfasst, die dazu bestimmt sind, sich über den Spalierdrähten zu bewegen, wobei diese oberen Schneideorgane (10) horizontal oder in einer Konfiguration einer umgedrehten V-Form angeordnet sind, vorzugsweise mit einem Freiwinkel von einigen Grad nach unten und nach vorne in Bezug auf die Vorschubrichtung.

13. Maschine nach Anspruch 12, **dadurch gekennzeichnet, dass** das Kurzschnittmodul (2) Mittel umfasst, die das automatische Wegrücken und die automatische Rückführung in die aktive Wiederannäherungsposition der oberen Schneideorgane (10) beim Passieren von Spalierpfählen, und im Bedarfsfall beim Passieren der Rebstöcke, im Fall von doppelten, übereinander angeordneten Spalierdrähten sicherstellt.

14. Maschine nach Anspruch 12, **dadurch gekennzeichnet, dass** das Kurzschnittmodul (2) wenigstens einen elektrischen oder hydraulischen Aktuator (49) umfasst, der vom Bediener gesteuert wird und das Wegrücken und die Rückführung in die aktive Wiederannnäherungsposition der oberen Schneideorgane (10) sicherstellt, beispielsweise für die Einfahrten und Ausfahrten der bearbeiteten Reihen.

15. Maschine nach einem der Ansprüche 12, 13 oder 14, **dadurch gekennzeichnet, dass** die oberen Schneideorgane (10) unabhängig voneinander seitlich verschiebbar angebracht sind.

16. Maschine nach einem der Ansprüche 2 oder 8 bis 15, **dadurch gekennzeichnet, dass** das Kurzschnittmodul (2) mindestens zwei untere Schneideorgane (11) umfasst, die dazu bestimmt sind, sich unter den Spalierdrähten zu bewegen, wobei diese unteren Schneideorgane (11) horizontal oder gemäß einer Konfiguration in V-Form angeordnet sind, vorzugsweise mit einem Freiwinkel von einigen Grad nach oben und nach vorne in Bezug auf die Vorschubrichtung.

17. Maschine nach Anspruch 16, **dadurch gekennzeichnet, dass** das Kurzschnittmodul (2) Mittel umfasst, die das automatische Wegrücken und die automatische Rückführung in die aktive Wiederannnäherungsposition der unteren Schneideorgane (11) beim Passieren der Spalierpfähle und beim Passieren der Rebstöcke sicherstellt.

18. Maschine nach Anspruch 16, **dadurch gekennzeichnet, dass** das Kurzschnittmodul (2) elektrische oder hydraulische Aktuatoren (49) umfasst, die vom Bediener gesteuert werden und das Wegrücken und die Rückführung in die aktive Wiederannnäherungsposition der unteren Schneideorgane (11) sicherstellen, beispielsweise für die Einfahrten und Ausfahrten der bearbeiteten Reihen.

19. Maschine nach einem der Ansprüche 16, 17 oder 18, **dadurch gekennzeichnet, dass** die unteren Schneideorgane (11) unabhängig voneinander seitlich verschiebbar angebracht sind.

20. Maschine nach einem der Ansprüche 13 oder 17, **dadurch gekennzeichnet, dass** die Mittel, die das automatische Wegrücken der oberen (10) und/oder unteren Schneideorgane (11) sicherstellen, von freilaufenden oder motorisierten Rädern (17) gebildet werden, wobei diese Räder einen Radius aufweisen, der geringfügig größer ist als der Aktionsradius der Schneidewerkzeuge (15).

21. Maschine nach einem der Ansprüche 2 oder 8 bis 20, **dadurch gekennzeichnet, dass** das Kurzschnittmodul (2) mindestens zwei seitliche Schneideorgane (12) umfasst, die dazu bestimmt sind, sich zu beiden Seiten der Spalierdrähte zu bewegen.

22. Maschine nach Anspruch 21, **dadurch gekennzeichnet, dass** sich drehende Kämme (27) vor der Innenseite der seitlichen Schneideorgane (12) angeordnet sind.

23. Maschine nach Anspruch 22, **dadurch gekennzeichnet, dass** die sich drehenden Kämme (27) gekrümmte Finger (27a) aufweisen, die um den Schneidrand der seitlichen Schneideorgane (12) angeordnet sind.

24. Maschine nach einem der Ansprüche 21 bis 23, **dadurch gekennzeichnet, dass** die seitlichen Schneideorgane (12) des Kurzschnittmoduls (2) unabhängig voneinander seitlich verschiebbar angebracht sind.

25. Maschine nach einem der Ansprüche 21 bis 24, **dadurch gekennzeichnet, dass** die seitlichen Schneideorgane (12) des Kurzschnittmoduls (2) in Bezug auf die Vorschubrichtung nach hinten und nach oben zurückziehbar angebracht sind.

26. Maschine nach einem der Ansprüche 21 bis 25, **dadurch gekennzeichnet, dass** die seitlichen Schneideorgane (12) des Kurzschnittmoduls (2) mit Führungskufen ausgestattet sind.

27. Maschine nach einem der Ansprüche 2 oder 8 bis 26, **dadurch gekennzeichnet, dass** die Schneideorgane (10, 11, 12) des Kurzschnittmoduls (2) kreisförmige Schneidewerkzeuge (15) umfassen, beispielsweise kreisförmige Sägeblätter.

28. Maschine nach einem der Ansprüche 2 oder 8 bis 27, **dadurch gekennzeichnet, dass** die kreisförmigen Schneidewerkzeuge (15) der Schneideorgane (10, 11, 12) unabhängig voneinander von Motoren (16) angetrieben werden, beispielsweise von Elektro- oder Hydraulikmotoren.

29. Maschine nach einem der Ansprüche 2 oder 12 bis 28, **dadurch gekennzeichnet, dass** das Kurzschnittmodul (2) ein Hebe- und Senksystem umfasst, das gestattet, dass die Gesamtheit der oberen (10), seitlichen (12) und unteren (11) Schneideorgane sich bewegt, um den Spalierdrähten mit einer Präzision von wenigen Millimetern zu folgen.

30. Maschine nach einem der Ansprüche 2 oder 12 bis 29, **dadurch gekennzeichnet, dass** das Kurzschnittmodul (2) ein Hebe- und Senksystem umfasst, das den oberen Schneideorganen (10) über den Spalierdrähten gestattet, den Spalierdrähten in der Höhe mit einer großen Präzision von wenigen Millimetern zu folgen.

31. Maschine nach einem der Ansprüche 2 oder 12 bis 30, **dadurch gekennzeichnet, dass** das Kurzschnittmodul (2) ein Hebe- und Senksystem umfasst, das den oberen Schneideorganen (10) und den seitlichen Schneideorganen (12) gestattet, sich zu bewegen, um den Spalierdrähten mit einer Präzision von wenigen Millimetern zu folgen.

32. Maschine nach einem der Ansprüche 16 bis 31, **dadurch gekennzeichnet, dass** das Kurzschnittmodul (2) ein Hebe- und Senksystem umfasst, das den unteren Schneideorganen (11) gestattet, unter den Spalierdrähten ein Beschneiden der Hölzer in einem präzisen Abstand von wenigen Millimetern zu den Spalierdrähten auszuführen.

33. Maschine nach einem der Ansprüche 29 bis 32, **dadurch gekennzeichnet, dass** die Hebe- und Senksysteme der Schneideorgane des Kurzschnittmoduls (2) vom elektronischen Analyse- und Steuersystem der Maschine angesteuert werden.

34. Maschine nach einem der Ansprüche 29 bis 33, **dadurch gekennzeichnet, dass** die Hebe- und Senksysteme der Schneideorgane des Kurzschnittmoduls (2) elektrische oder hydraulische Aktuatoren (21, 24) umfassen.

35. Maschine nach einem der Ansprüche 29 bis 34, **dadurch gekennzeichnet, dass** die elektrischen oder hydraulischen Aktuatoren (21, 24) der Hebe- und Senksysteme der Schneideorgane des Kurzschnittmoduls (2) von Federn (33) unterstützt werden.

36. Maschine nach Anspruch 35, **dadurch gekennzeichnet, dass** die Aktuatoren (21, 24) der Schneideorgane (10, 11, 12) mit Positionssensoren (36, 37) ausgestattet sind, die an den Ansteuerungsvorgängen der Aktuatoren beteiligt sind.

37. Maschine nach einem der Ansprüche 2 oder 8 bis 36, **dadurch gekennzeichnet, dass** sie Zentrierungsmittel umfasst, die gestatten, sie in Bezug auf die Rebstöcke (V) und die Pfähle (P) zu positionieren.

38. Maschine nach Anspruch 37, **dadurch gekennzeichnet, dass** die Zentrierungsmittel durch voneinander beabstandete Führungskufen (35) gebildet werden, die horizontal oder annähernd horizontal zu beiden Seiten der vertikalen mittleren Arbeitsebene der Maschine angeordnet sind.

39. Maschine nach einem der Ansprüche 2 oder 8 bis 38, **dadurch gekennzeichnet, dass** der Rahmen (19) der Maschine ein Aufhängungsmittel (53) umfasst, mithilfe dessen sie am Ende eines Trägerarms (34) des Fahrzeugs angebracht ist.
